# EUROPÄISCHE PATENTSCHRIFT

(11) **EP 3 257 623 B1**
(45) Veröffentlichungstag und Bekanntmachung des Hinweises auf die Patenterteilung: **05.08.2020**
(21) Anmeldenummer: 17175641.4
(22) Anmeldetag: 13.06.2017
(51) Int. Cl.: B23Q 3/18, B25J 9/00, B23Q 7/04, B23Q 7/14

(54) **HANDHABUNGSVORRICHTUNG ZUM EINSATZ AN EINER WERKZEUGMASCHINE**
HANDLING DEVICE FOR USE ON A MACHINE TOOL
DISPOSITIF DE MANUTENTION DESTINÉ À ÊTRE UTILISÉ SUR UNE MACHINE-OUTIL

(30) Priorität: 14.06.2016 DE 102016210508
(43) Veröffentlichungstag der Anmeldung: 20.12.2017
(73) Patentinhaber: GILDEMEISTER Drehmaschinen GmbH, 33689 Bielefeld (DE)
(72) Erfinder: KORMANN, Benjamin, 87719 Mindelheim (DE)
(74) Vertreter: MERH-IP Matias Erny Reichl Hoffmann Patentanwälte PartG mbB

(56) Entgegenhaltungen:
- EP-A1- 1 985 411
- DE-A1- 19 958 937
- DE-A1-102006 000 721
- DE-U1-202005 011 275

## Beschreibung

### Beschreibung

Die vorliegende Erfindung betrifft eine Handhabungsvorrichtung zum Einsatz an einer Werkzeugmaschine, insbesondere eine einen Roboter bzw. Roboterarm aufweisende Handhabungsvorrichtung zum Einsatz an einer Werkzeugmaschine, die insbesondere zum automatisierten Einsetzen bzw. Auswechseln von Werkstücken bzw. Werkzeugen an der Werkzeugmaschine eingerichtet ist.

### Hintergrund

Im Stand der Technik sind Werkzeugmaschinen und insbesondere numerisch gesteuerte Werkzeugmaschinen bekannt, an denen Werkstücke mittels Werkzeugen bearbeitet werden können. Zum Einsatz an derartigen Werkzeugmaschinen sind Handhabungsvorrichtungen bekannt, zum automatisierten Einsetzen bzw. Auswechseln von Werkstücken bzw. Werkzeugen an der Werkzeugmaschine, z.B. mit Hilfe eines programmgesteuerten Roboters bzw. Roboterarms.

Die DE 10 2009 048 863 A1 zeigt eine gattungsgemäße beispielhafte Handhabungsvorrichtung zum automatisierten Einsetzen bzw. Auswechseln von Werkstücken bzw. Werkzeugen an einer Werkzeugmaschine.

Weiterhin offenbart EP 1 985 411 A1 eine Werkzeugmaschinenanordnung , die den nächstliegenden Stand der Technik bildet, mit einem frei programmierbaren Roboter, der einen Werkstücktransfer zwischen Paletten und dem Werkstückwechsler sowie einen Werkzeugtransfer zwischen dem Werkzeugmagazin und dem Werkzeugwechsler durchführt. Beide Werkstückwechsler sind an einem gemeinsamen Wechslerträger angeordnet, der zwischen einer dem Roboter nahen Transferposition und einer der Werkstückaufnahme bzw. dem Spindelkopf nahen Wechselposition verfahrbar ist.

Darüber hinaus offenbart DE 10 2006 000 721 A1 ein Handhabungssystem, das einen Knickarmroboter umfasst, der im Bereich einer zentralen, vertikalen Achse
angeordnet ist. Der Roboter ist dazu ausgebildet, Werkstücke in eine Bearbeitungsmaschine einzulegen oder daraus zu entnehmen. Ferner ist eine Handhabungseinrichtung vorhanden, die um die zentrale Achse verschwenkbar ist. Auf einem konzentrischen Kreisring um die zentrale Achse sind zudem Stapel- und Abstellzonen für Werkstückträger ausgebildet, wobei die Werkstückträger unbearbeitete oder bearbeitete Werkstücke enthalten und mit der Handhabungseinrichtung zwischen den Stapel- und Abstellzonen verschiebbar sind.

Jedoch sind derartige Handhabungsvorrichtungen gewöhnlich an der Werkzeugmaschine bzw. benachbart zu der Werkzeugmaschine festinstalliert und nehmen daher Raum in der Werkshalle neben der Werkzeugmaschine in Anspruch und sind nicht universell und effizient einsetzbar.

Ausgehend von den im Stand der Technik ist es eine Aufgabe der Erfindung, eine Handhabungsvorrichtung zum Einsatz an einer Werkzeugmaschine bereitzustellen, die universell und effizient bei geringem Platzbedarf und bevorzugt mobil an mehreren Werkzeugmaschinen, je nach Bedarf, einsetzbar ist und einfach eingerichtet werden kann.

### Zusammenfassung der Erfindung

Zur Lösung der vorstehend genannten Aufgaben wird erfindungsgemäß eine Handhabungsvorrichtung gemäß Anspruch 1 vorgeschlagen. Abhängige Ansprüche betreffen bevorzugte und beispielhafte Ausführungsformen der Erfindung.

Gemäß der vorliegenden Erfindung wird eine Handhabungsvorrichtung zum Einsatz an einer Werkzeugmaschine vorgeschlagen, umfassend einen auf einer Bodenfläche aufstellbaren Grundkörper, einen auf der Oberseite des Grundkörpers aufstellbaren Speicherkörper zur Lagerung einer Mehrzahl von Werkstücken oder Werkzeugen, und einen an dem Grundkörper angeordneten Handhabungsroboter mit einer Greifereinrichtung zur Aufnahme eines Werkstücks bzw. Werkzeugs von dem Speicherkörper und zum Einsetzen des mit der Greifereinrichtung von dem Speicherkörper aufgenommenen Werkstücks bzw. Werkzeugs an einer entsprechenden Werkstück- bzw. Werkzeugaufnahme der Werkzeugmaschine.

Erfindungsgemäß sind eine Mehrzahl von ersten Aufstellelementen auf der Unterseite des Speicherkörpers angeordnet, und eine Mehrzahl von ersten Zentrierelementen sind auf der Oberseite des Grundkörpers angeordnet, wobei die ersten Aufstellelemente bei auf der Oberseite des Grundkörpers aufgestelltem Speicherkörper jeweils paarweise mit den ersten Zentrierelementen selbstzentrierend zusammenwirken, derart, dass der Speicherkörper relativ zu dem Grundkörper eine vorbestimmte Referenzpositionierung einnimmt.

Dies hat den Vorteil, dass der Speicherkörper einfach ein- und ausgewechselt werden kann, und eine manuelle Bestückung der Werkstücke bzw. Werkzeuge auf dem Speicherkörper nicht an der Handhabungsvorrichtung durchgeführt werden muss. So können Rüstzeiten effizient hauptzeitparallel durchgeführt werden.

Zudem kann der Speicherkörper einfach abgenommen werden und auch wieder einfach aufgesetzt werden kann, wobei das Zusammenwirken der Zentrier- und Aufstellelemente eine einfache und genaue Positionierung bzw. Wiederpositionierung ermöglicht, die keine Neukalibrierung einer Referenzpositionierung erfordert.

In zweckmäßigen Ausführungsbeispielen sind drei erste Aufstellelemente auf der Unterseite des Speicherkörpers angeordnet, insbesondere bevorzugt zur Bereitstellung einer Drei-Punkt-Aufstellung. Dies ermöglicht vorteilhaft eine stabile und genaue Positionierung in einer vorbestimmten Ebene.

In zweckmäßigen Ausführungsbeispielen sind drei erste Zentrierelemente auf der Oberseite des Grundkörpers angeordnet, insbesondere bevorzugt zur Bereitstellung einer Drei-Punkt-Aufstellung. Dies ermöglicht vorteilhaft eine stabile und genaue Positionierung in einer vorbestimmten Ebene.

In zweckmäßigen Ausführungsbeispielen sind bevorzugt drei erste Zentrierelemente auf der Oberseite des Grundkörpers angeordnet zur Bereitstellung einer Drei-Punkt-Aufstellung des Speicherkörpers in einer ersten Stellung, und drei weitere erste Zentrierelemente sind bevorzugt auf der Oberseite des Grundkörpers angeordnet zur Bereitstellung einer Drei-Punkt-Aufstellung des Speicherkörpers in einer zweiten Stellung. Dies ermöglicht vorteilhaft auf einfache und effiziente Weise zwei unterschiedliche, jeweils genau positionierte Stellungen des Speicherkörpers, je nach Bedarf.

In zweckmäßigen Ausführungsbeispielen weist der Speicherkörper bevorzugt zwei Aufnahmeabschnitte für Gabelzinken eines Gabelstaplers auf, zum Aufnehmen und Abheben des Speicherkörpers von dem Grundkörper mittels eines Gabelstaplers. Dies ermöglicht vorteilhaft ein einfaches und effizientes Ein- bzw. Auswechseln des Speicherkörpers.

In zweckmäßigen Ausführungsbeispielen umfasst der Speicherkörper einen Verriegelungsmechanismus, bevorzugt mit einem Verriegelungselement, das bevorzugt mit einem auf der Oberseite des Grundkörpers angeordneten Verriegelungselement in einen verriegelten Zustand bringbar ist. Dies ermöglicht vorteilhaft eine einfache und effiziente Verriegelung bzw. Entriegelung des Speicherkörpers.

In zweckmäßigen Ausführungsbeispielen ist der Verriegelungsmechanismus dazu eingerichtet, das Verriegelungselement des Verriegelungsmechanismus zu entriegeln, wenn Gabelzinken eines Gabelstaplers in die Aufnahmeabschnitte des Speicherkörpers für Gabelzinken eindringen. Dies ermöglicht vorteilhaft eine einfache und effiziente Verriegelung bzw. Entriegelung des Speicherkörpers.

In zweckmäßigen Ausführungsbeispielen trägt der Speicherkörper eine Halteplatte, die eine Mehrzahl von Aufnahmeöffnungen für Werkzeuge bzw. Werkstücke aufweist.

In zweckmäßigen Ausführungsbeispielen weist der Handhabungsroboter sechs steuerbare Rotationsachsen auf, und/oder die Greifereinrichtung des Handhabungsroboters weist einen Doppelgreifer auf.

Erfindungsgemäß sind eine Mehrzahl von zweiten Aufstellelementen auf der Unterseite des Grundkörpers angeordnet, die dazu eingerichtet sind, bei auf der Bodenfläche aufgestelltem Grundkörper, wenn eine Mehrzahl von zweiten Zentrierelementen auf der Bodenfläche angeordnet sind, jeweils paarweise mit den zweiten Zentrierelementen selbstzentrierend zusammenzuwirken, derart, dass der Grundkörper relativ zu der Bodenfläche bzw. relativ zu der auf der Bodenfläche stehenden Werkzeugmaschine eine vorbestimmte Referenzpositionierung einnimmt.

Dies hat den Vorteil, dass die Handhabungsvorrichtung einfach und mobil universell an mehreren Werkzeugmaschinen hintereinander genutzt werden kann. Zudem kann die Handhabungsvorrichtung einfach aufgestellt werden, wobei das Zusammenwirken der Zentrier- und Aufstellelemente eine einfache und genaue Positionierung bzw. Wiederpositionierung ermöglicht, die keine Neukalibrierung einer Referenzpositionierung erfordert.

In zweckmäßigen Ausführungsbeispielen sind drei zweite Aufstellelemente zur Bereitstellung einer Drei-Punkt-Aufstellung auf der Unterseite des Grundkörpers angeordnet. Dies ermöglicht vorteilhaft eine stabile und genaue Positionierung in einer vorbestimmten Ebene.

In zweckmäßigen Ausführungsbeispielen umfasst die Handhabungsvorrichtung eine Sensoreinrichtung zum Detektieren einer Person (z.B. eines Bedieners) oder eines Gegenstands (z.B. eines Gabelstaplers oder Hallenkrans) in einem Bereich benachbart zu der Handhabungsvorrichtung. Dies ermöglicht vorteilhaft eine erhöhte Sicherheit.

In zweckmäßigen Ausführungsbeispielen ist die Handhabungsvorrichtung dazu eingerichtet, den Betrieb zu stoppen, wenn die Sensoreinrichtung eine Person oder einen Gegenstand in einem ersten Bereich detektiert, und/oder die Handhabungsvorrichtung ist dazu eingerichtet, in einen verlangsamten Betrieb zu wechseln, wenn die Sensoreinrichtung eine Person oder einen Gegenstand in einem zweiten Bereich detektiert. Dies ermöglicht vorteilhaft eine erhöhte Sicherheit.

Erfindungsgemäß ist die Handhabungsvorrichtung über eine kabellose Verbindung oder Kabelsteckverbindung mit der Werkzeugmaschine bzw. einer Steuerungseinrichtung der Werkzeugmaschine verbindbar bzw. koppelbar.

Erfindungsgemäß ist die Handhabungsvorrichtung dazu eingerichtet, über die Kommunikationsverbindung die angeschlossene bzw. verbundene Werkzeugmaschine aus einer Gruppe von (z.B. vorbekannten) Werkzeugmaschinen zu identifizieren. Hierbei kann die Handhabungsvorrichtung vorzugsweise dazu eingerichtet sein, in Abhängigkeit der identifizierten Werkzeugmaschine eine vorgespeicherte Referenzpositionierung zu bestimmen. Dies ermöglicht vorteilhaft eine einfache und genaue Positionierung bzw. Wiederpositionierung, die keine Neukalibrierung einer Referenzpositionierung erfordert.

In zweckmäßigen Ausführungsbeispielen ist die Handhabungsvorrichtung dazu eingerichtet, über ein Bedienpult der verbundenen Werkzeugmaschine gesteuert und/oder eingerichtet zu werden. Dies ermöglicht vorteilhaft eine einfache einheitliche Steuerung der Werkzeugmaschine und der Handhabungsvorrichtung, ohne eine eigene Steuereinrichtung der Handhabungsvorrichtung bereitstellen zu müssen.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### Kurzbeschreibung der Figuren

**Fig. 1** zeigt eine beispielhafte Perspektivdarstellung einer Handhabungsvorrichtung gemäß einem Ausführungsbeispiel der Erfindung;
**Figs. 2A** bis **2F** zeigen jeweils beispielhaft eine Vorderansicht, eine rechte Seitenansicht, eine linke Seitenansicht, eine Rückansicht, eine Draufsicht und eine Untersicht auf die Handhabungsvorrichtung gemäß Fig. 1;
**Fig. 3** zeigt beispielhaft eine Schablone zur Positionierung von Zentrierelementen zum Aufstellen der Handhabungsvorrichtung gemäß Fig. 1;
**Figs. 4A und 4B** zeigen jeweils beispielhaft Ansichten eines Paars von Zentrier- und Aufstellelementen zum Aufstellen der Handhabungsvorrichtung gemäß Fig. 1;
**Figs. 5A und 5B** zeigen jeweils beispielhaft Ansichten des Speicherkörpers der Handhabungsvorrichtung gemäß Fig. 1;
**Fig. 6** zeigt eine beispielhafte Perspektivdarstellung der Handhabungsvorrichtung gemäß Fig. 1 mit abgenommenem Speicherkörper; und
**Fig. 7** zeigt eine beispielhafte Draufsicht der Handhabungsvorrichtung gemäß Fig. 1 an einer Werkzeugmaschine.

### Detaillierte Beschreibung der Figuren und

### bevorzugter Ausführungsbeispiele

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges des unabhängigen Anspruchs umfasst sind.

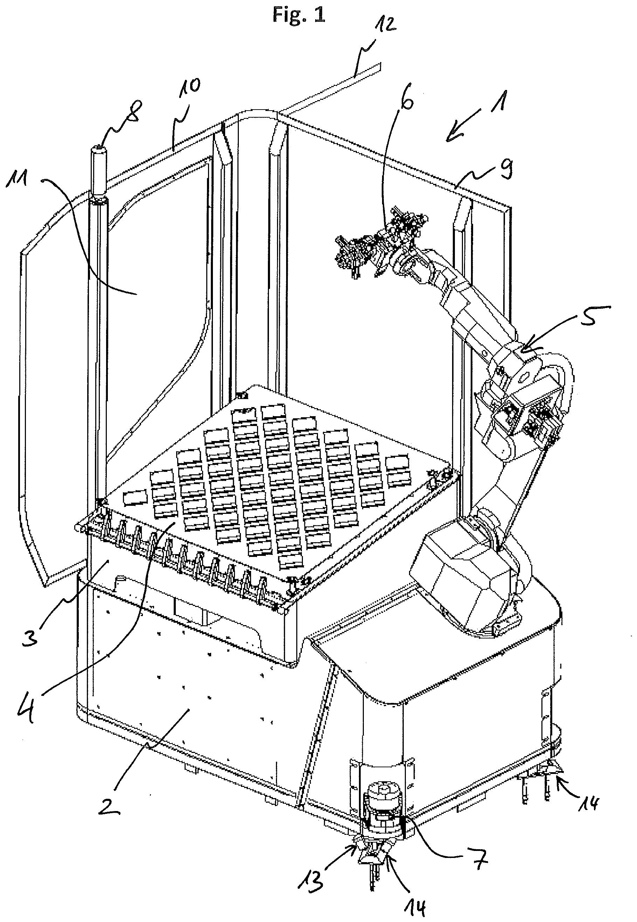

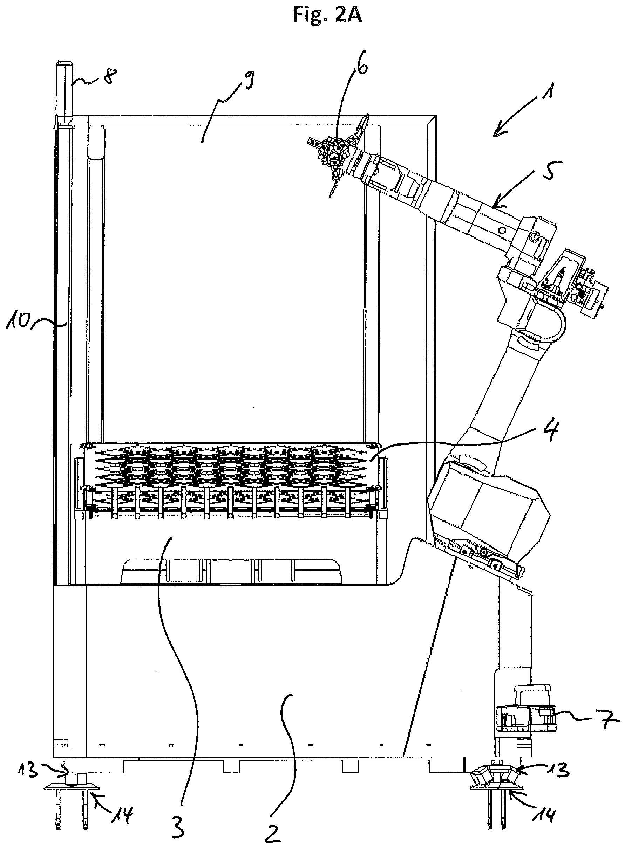

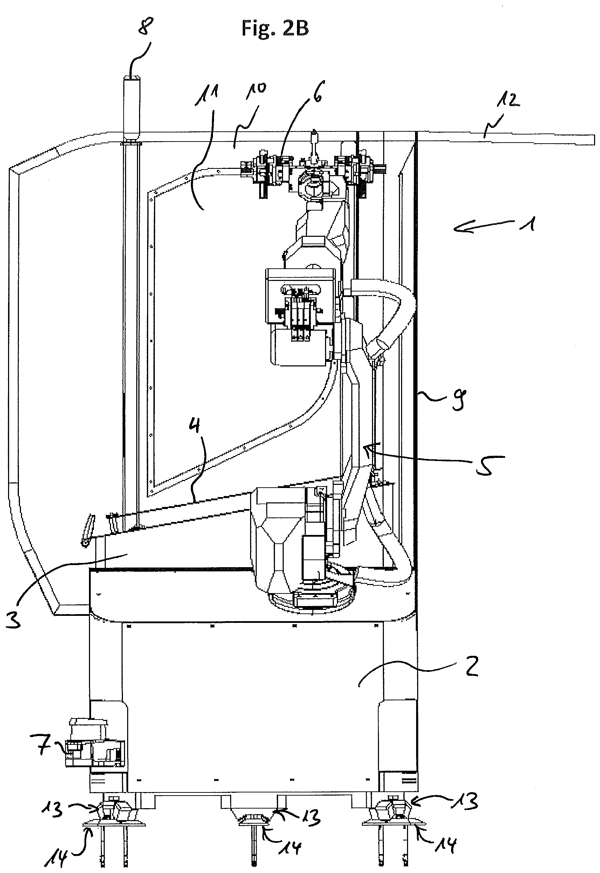

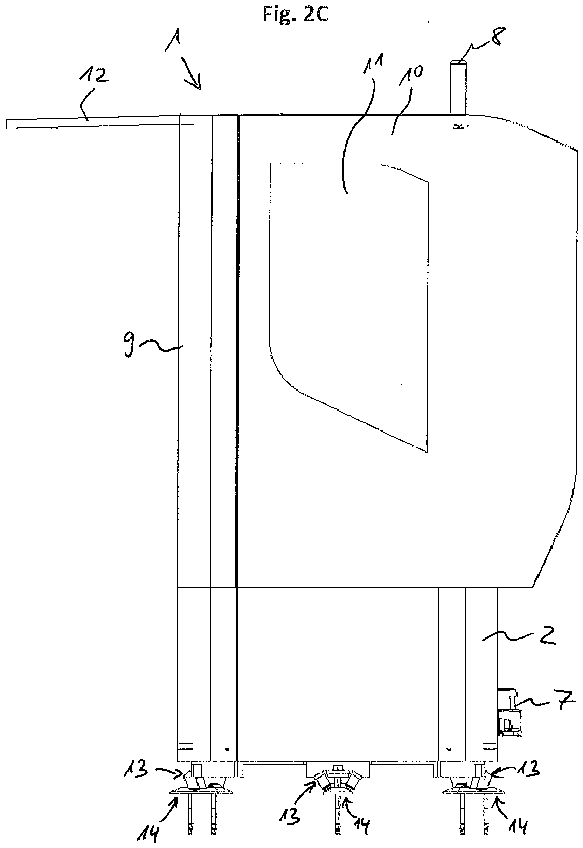

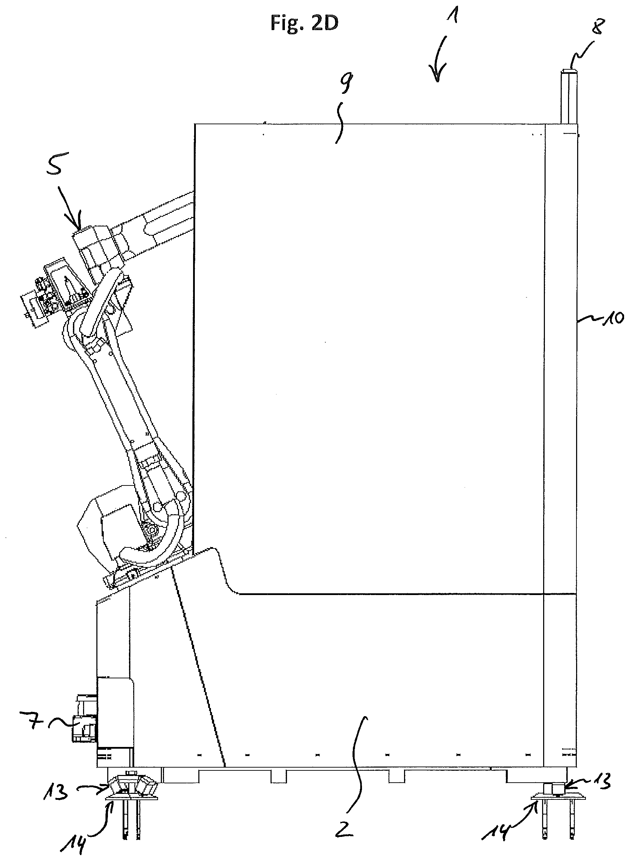

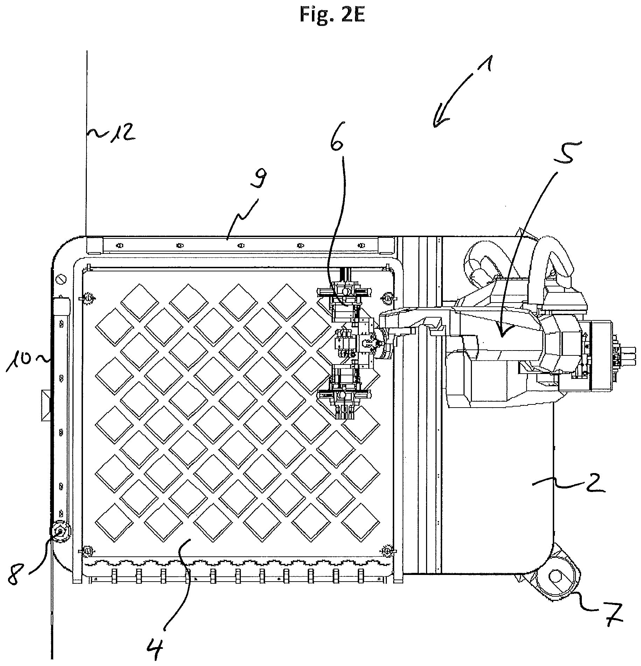

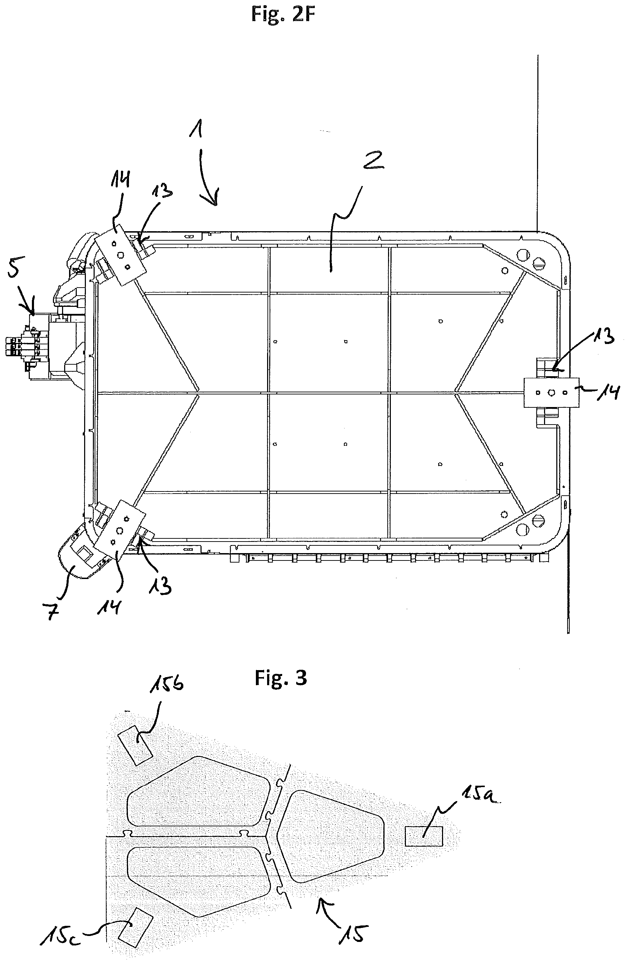

**Fig. 1** zeigt eine beispielhafte Perspektivdarstellung einer Handhabungsvorrichtung gemäß einem Ausführungsbeispiel der Erfindung. **Figs. 2A bis 2F** zeigen jeweils beispielhaft eine Vorderansicht, eine rechte Seitenansicht, eine linke Seitenansicht, eine Rückansicht, eine Draufsicht und eine Untersicht auf die Handhabungsvorrichtung gemäß Fig. 1.

Die Handhabungsvorrichtung 1 umfasst einen Grundkörper 2, der auf einer Bodenfläche z.B. einer Werkhalle und insbesondere benachbart zu bzw. vor einer Werkzeugmaschine aufstellbar ist. Auf dem Grundkörper 2 ist ein Speicherkörper 3 angeordnet, der beispielhaft eine Werkstückhalterplatte 4 hält. In bevorzugten Ausführungsbeispielen kann die Werkstückhalterplatte 4 auf dem Speicherkörper 3 aufgelegt bzw. lösbar befestigt sein.

Die Werkstückhalterplatte 4 weist beispielhaft eine Mehrzahl von Öffnungen bzw. Werkstückaufnahmen auf, in denen jeweilige Werkstücke gehalten bzw. gelagert werden können, die an der Werkzeugmaschine zu bearbeiten sind bzw. bearbeitet wurden. Alternativ oder zusätzlich können in den Öffnungen bzw. Aufnahmen der Werkstückhalterplatte 4 auch Werkzeuge bereitgestellt werden.

Seitlich zu der Werkstückhalterplatte 4 bzw. neben dem Speicherkörper 3 ist an dem Grundkörper 2 ein Roboter 5 bzw. Roboterarm angeordnet, der eine Greifereinrichtung 6 aufweist zum Aufnehmen von Werkstücken bzw. Werkzeugen von der Werkstückhalterplatte 4.

Beispielhaft ist die Greifereinrichtung 6 in diesem Ausführungsbeispiel als Doppelgreifer ausgebildet, so dass der Roboter 6 mittels der Greifereinrichtung 6 zeitgleich zwei Werkstücke bzw. Werkzeuge halten und handhaben kann, insbesondere z.B. um ein zu der Werkzeugmaschine zu beförderndes Werkstück bzw. Werkzeug von der Werkstückhalterplatte 4 mit einem Greifer aufzunehmen, während mit dem anderen Greifer noch ein anderes, von der Werkzeugmaschine entnommenes Werkstück bzw. Werkzeug gehalten wird, das dann an der freiwerdenden Stelle der Werkstückhalterplatte 4 eingelegt werden kann.

Der Roboter 5 ist dazu eingerichtet, Werkstücke bzw. Werkzeuge automatisiert an der Werkzeugmaschine einzusetzen und/oder von dieser abzuführen. Beispielhaft ist der Roboter 5 in diesem Ausführungsbeispiel mit sechs steuerbaren bzw. antreibbaren Rotationsachsen ausgebildet. Jedoch kann auch ein Roboter bzw. Roboterarm mit mehr oder weniger steuerbaren Achsen bereitgestellt werden.

An der Rückseite (die beispielhaft dazu vorgesehen ist, zur Werkzeugmaschine weisend orientiert zu werden) umfasst die Handhabungsvorrichtung 1 beispielhaft einen Rückwandabschnitt 9 und einen beispielhaft horizontal nach hinten weisenden Positionierungsstab 12 auf, der die Positionierung an der Werkzeugmaschine erleichert. Auf der linken Seite umfasst die Handhabungsvorrichtung 1 beispielhaft einen Seitenwandabschnitt 10, der beispielhaft mit einem Sichtfenster 11 versehen ist.

Auf dem Seitenwandabschnitt 10 ist beispielhaft eine Signallampe 8 vorgesehen, die dazu eingerichtet sein kann, einen Betriebszustand der Handhabungsvorrichtung 1 visuell anzuzeigen, z.B. durch Licht in unterschiedlichen Farben zur Kennzeichnung verschiedener Betriebszustände.

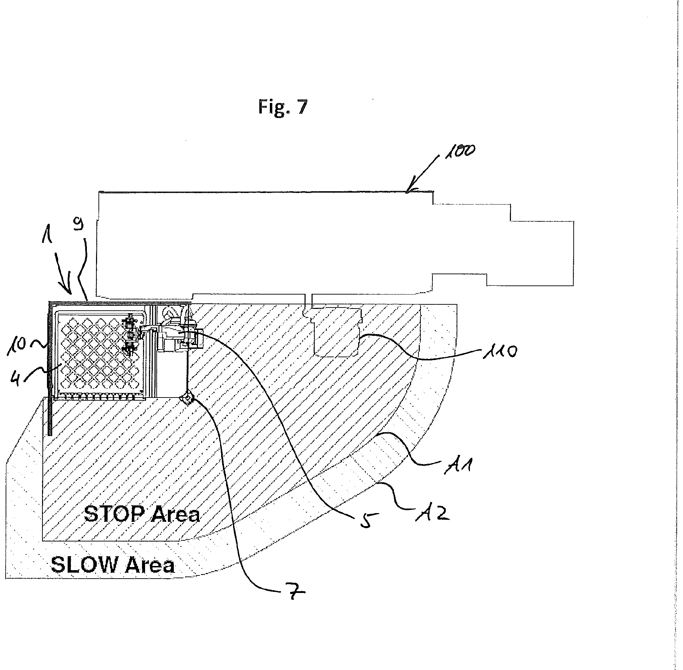

Beispielhaft an dem vorderen rechten Eckabschnitt weist der Grundkörper 5 eine Sensoreinrichtung 7 auf, die dazu eingerichtet ist, eine Person (z.B. einen Bediener) oder einen Gegenstand in der Nähe der Handhabungsvorrichtung 1 zu detektieren, z.B. um den Betrieb der Handhabungsvorrichtung 1 anzuhalten oder zu verlangsamen, wenn eine Person oder ein Gegenstand detektiert wird (siehe z.B. die beispielhaften Detektionszonen A1 und A2 gemäß Fig. 7 und die dazugehörige Beschreibung weiter unten). Die Sensoreinrichtung 7 kann hierzu einen oder mehrere Bewegungsmelder, einen oder mehrere Infrarotsensoren und/oder einen oder mehrere Lasersensoren bzw. Lichtschrankeneinrichtungen aufweisen.

Wenn die Handhabungsvorrichtung 1 z.B. an einer Drehmaschine eingesetzt wird, kann der Roboter 5 mittels der Greifereinrichtung 6 Werkstücke von der Halterplatte 4 auf dem Speicherkörper 3 aufnehmen und an einer Werkstückspindel bzw. einem Spannfutter oder einer Werkstückeinspannung der Werkzeugmaschine einsetzen bzw. an der Werkstückspindel bzw. an dem Spannfutter oder der Werkstückeinspannung der Werkzeugmaschine aufnehmen und an der Halterplatte 4 auf dem Speicherkörper 3 ablegen.

Wenn die Handhabungsvorrichtung 1 z.B. an einer Fräsmaschine eingesetzt wird, kann der Roboter 5 mittels der Greifereinrichtung 6 Werkzeuge von der Halterplatte 4 auf dem Speicherkörper 3 aufnehmen und an einer Werkzeugspindel der Werkzeugmaschine einsetzen bzw. an der Werkzeugspindel der Werkzeugmaschine aufnehmen und an der Halterplatte 4 auf dem Speicherkörper 3 ablegen, oder Werkstücke von der Halterplatte 4 auf dem Speicherkörper 3 aufnehmen und an einer Werkstückeinspannung der Werkzeugmaschine einsetzen bzw. an der Werkstückeinspannung der Werkzeugmaschine aufnehmen und an der Halterplatte 4 auf dem Speicherkörper 3 ablegen.

Hierzu ist es erforderlich, dass die Handhabungsvorrichtung 1 eine in der numerischen Steuerung der Werkzeugmaschine und/oder des Roboters 5 gespeicherte Referenzposition in Bezug auf die Werkzeugmaschine einnimmt bzw. in Abhängigkeit der Positionierung der Handhabungsvorrichtung 1 in Bezug auf die Werkzeugmaschine die eingenommene Referenzposition in einem ggf. manuell gesteuerten Kalibrierungsvorgang zu ermitteln und in der numerischen Steuerung der Werkzeugmaschine und/oder des Roboters 5 zu speichern.

Um diesen Kalibrierungsvorgang nicht jedesmal bei erneutem Einrichten der Handhabungsvorrichtung 1 an einer Werkzeugmaschine durchführen zu müssen, umfasst die Handhabungsvorrichtung 1 einen selbstzentrierenden Positionierungsmechanismus, derart, dass die Handhabungsvorrichtung 1 selbstzentrierend die einmalig bestimmte Referenzposition in Bezug auf die Werkzeugmaschine einnimmt.

Hierzu umfasst die Handhabungsvorrichtung 1 jeweils Paare von Zentrierelementen 14 und entsprechenden Aufstellelementen 13 (d.h. ein Paar umfasst ein Zentrierelement 14 und ein entsprechendes Aufstellelement 13), wobei die Zentrierelemente 14 dazu vorgesehen sind in fester Positionierung an der Bodenfläche vor bzw. benachbart zu der Werkzeugmaschine befestigt zu werden.

In diesem Ausführungsbeispiel ist der selbstzentrierenden Positionierungsmechanismus lediglich beispielhaft mit genau drei Zentrierelementen 14 bzw. drei entsprechenden Aufstellelementen 13 ausgebildet. Dies hat den Vorteil, dass eine genaue und stets eine Ebene bildende Dreipunktaufstellung bereitgestellt werden kann.

In weiteren Ausführungsbeispielen ist es jedoch möglich, auch mehr oder weniger als drei Zentrierelemente 14 bzw. entsprechende Aufstellelemente 13 bereitzustellen, wobei insbesondere bei weniger als drei Zentrierelementen 14 bzw. entsprechenden Aufstellelementen 13 ggf. ein oder mehr zusätzliche Fußelemente vorgesehen werden können.

**Fig. 3** zeigt beispielhaft eine Schablone zur Positionierung von Zentrierelementen zum Aufstellen der Handhabungsvorrichtung gemäß Fig. 1. Die Schablone 15 weist beispielhaft drei an die Form der Zentrierelemente 14 angepasste Öffnungen 15a, 15b und 15c auf, die eine Positionierung der beispielhaft drei Zentrierelemente 14 relativ zueinander vorgeben, so dass diese bei der Befestigung in der Bodenfläche die vorbestimmte Positionierung und Ausrichtung zueinander einnehmen.

Die Zentrierelemente 14 können z.B. mittels Schrauben 16, Bolzen oder andersartiger Befestigungselemente in der Bodenfläche befestigt werden. Die Verwendung der Schablone 15 bei der Befestigung der Zentrierelemente 14 stellt auf einfache Art und Weise sicher, dass die Zentrierelemente 14 einfach und genau in der vorbestimmten Positionierung und Ausrichtung zueinander befestigt werden können.

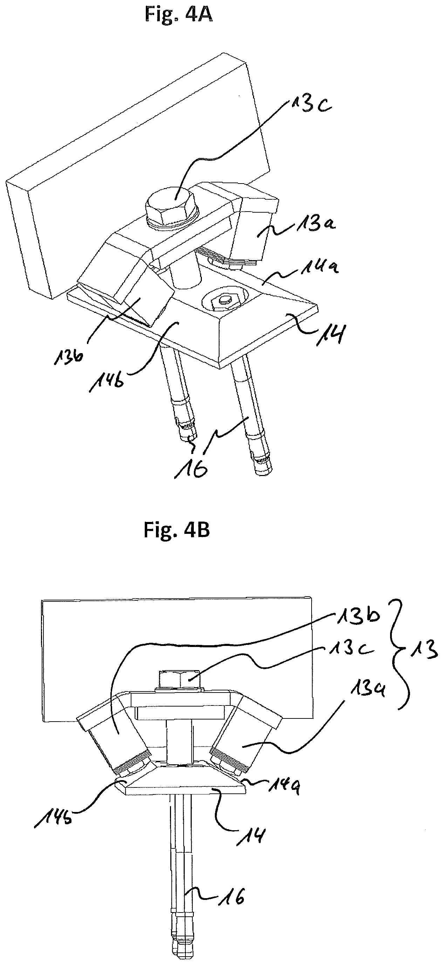

**Figs. 4A und 4B** zeigen jeweils beispielhaft Ansichten eines Paars von Zentrier- und Aufstellelementen zum Aufstellen der Handhabungsvorrichtung gemäß Fig. 1.

Beispielhaft weisen die Zentrierelemente 14 eine rechtwinklige Grundfläche auf und weisen einen trapezförmigen Querschnitt auf, derart, dass sich die Zentrierelemente 14 nach oben verjüngen und jeweils gegenüberliegende schräg ausgerichtete Flächen 14a und 14b aufweisen.

Die Aufstellelemente 13 weisen beispielhafte schräg zueinander liegende Auflageelemente 13a und 13b auf, die jeweils auf den schräg ausgerichteten Flächen 14a und 14b der Zentrierelemente 14 aufliegen, wenn die Aufstellelemente 13 jeweils paarweise mit den entsprechenden Zentrierelementen 14 zusammenwirken bzw. auf diesen aufliegen. Weiterhin weisen die Aufstellelemente 13 beispielhaft ein weiteres Auflageelement 13c zwischen den Auflageelementen 13a und 13b auf. Beispielhaft weisen die Auflageelemente 13a, 13b und 13c jeweils höhenverstellbare Schrauben zur Feinjustierung auf.

Die in Figs. 4A und 4B gezeigten Aufstellelemente 13 und Zentrierelemente 14 sind lediglich beispielhaft und können auch anders ausgebildet werden. Im Grundprinzip weist entweder das Aufstellelement 13 oder das Zentrierelement 14 eines jeweiligen Paars einen Zentrierabschnitt auf, der sich zu dem anderen Element weisend verjüngt (hier beispielhaft die Auflageflächen der 14a und 14b), wobei das jeweilige andere Element eines Paares von Aufstell- und Zentrierelement dann einen Aufnahmeabschnitt (hier beispielhaft die Auflageflächen der Elemente 13a bis 13c) aufweist zur selbstzentrierenden Aufnahme des sich verjüngenden Zentrierabschnitts, wenn das Aufstellelement 13 auf das entsprechende Zentrierelement 14 aufgesetzt wird.

Selbstzentrierend meint hierbei, dass bei einem auf einem Zentrierelement 14 aufgesetzten Aufstellelement 13 eine Positionierung des Aufstellelements 13 in zumindest einer Richtung oder in mehreren Richtungen formschlüssig festgelegt ist, derart, dass bei einem Zustand, in dem alle oder mehrere Aufstellelemente 13 auf den jeweiligen entsprechenden Zentrierelementen 14 aufgesetzt sind, die Positionierung des Grundkörpers 2 relativ zu der Bodenfläche, auf der die Zentrierelemente 14 befestigt sind, in einer horizontalen Ebene und vertikal nach unten formschlüssig festgelegt ist. Analog gilt dies für Aufstell- und Zentrierelemente zwischen dem Grundkörper 2 und dem Speicherkörper 3.

Durch die jeweils paarweise bereitgestellten Aufstellelemente 13 und Zentrierelemente 14 ist es einfach möglich, den Grundkörper 2 der Handhabungsvorrichtung 1 einfach aufzustellen, indem die Aufstellelemente 13 über den jeweiligen entsprechenden Zentrierelementen 14 positioniert werden und dann auf diesen aufgesetzt werden, z.B. wenn der Grundkörper 2 mittels eines Gabelstaplers zu der Werkzeugmaschine verfahren wird und dann über den in dem Boden befestigten Zentrierelementen 14 aufgesetzt wird.

Dies ermöglicht es, dass die Handhabungsvorrichtung 1 mobil und zum Einsatz an mehreren Werkzeugmaschinen eingesetzt werden kann, und bei Verbringen zu einer der Werkzeugmaschinen an dieser einfach und genau selbstzentrierend aufgestellt werden kann und die gleiche Referenzpositionierung zu der Werkzeugmaschine einnimmt. So kann die Handhabungsvorrichtung 1 einfach und effizient eingesetzt werden und insbesondere entfällt das Erfordernis die Referenzpositionierung zur Werkzeugmaschine erneut durch Kalibration zu ermitteln.

Stattdessen ist es auf einfache Weise möglich, dass die Handhabungsvorrichtung 1 durch einen Steckanschluss an die Werkzeugmaschine, z.B. zur Energieversorgung der Handhabungsvorrichtung 1 und/oder zur Kommunikationsverbindung mit der numerischen Steuerung und/oder einem Steuercomputer bzw. Bedienpult der Werkzeugmaschine, erkennt bzw. identifiziert, an welcher Werkzeugmaschine (einer Gruppe von Werkzeugmaschinen) die Handhabungsvorrichtung 1 aufgestellt ist, und in Abhängigkeit der erkannten bzw. identifizierten Werkzeugmaschine die vorher ermittelte bzw. vorgespeicherte Referenzpositionierung zu ermitteln.

Alternativ kann die Referenzpositionierung an der numerischen Steuerung und/oder dem Steuercomputer bzw. Bedienpult der Werkzeugmaschine vorgespeichert sein und bei Verbindungsherstellung an die Werkzeugmaschine an die Handhabungsvorrichtung 1 übermittelt werden. Neben einer Kommunikation über eine Steckverbindung kann auch eine kabellose Kommunikation zwischen Werkzeugmaschine und Handhabungsvorrichtung 1 bereitgestellt werden (z.B. mittels BlueTooth, WLAN, etc.).

Hierbei kann der Einrichtvorgang mit Kalibrierung und Ermittlung der Referenzpositionierung der Handhabungsvorrichtung 1 zu der entsprechenden Werkzeugmaschine vorteilhaft nur einmal durchgeführt werden, und wenn die Handhabungsvorrichtung 1 erneut zu der Werkzeugmaschine gebracht wird und auf den vorinstallierten Zentrierelementen 14 aufgestellt wird, kann die zuvor gespeicherte Referenzpositionierung erneut und ohne Neukalibrierung übernommen werden.

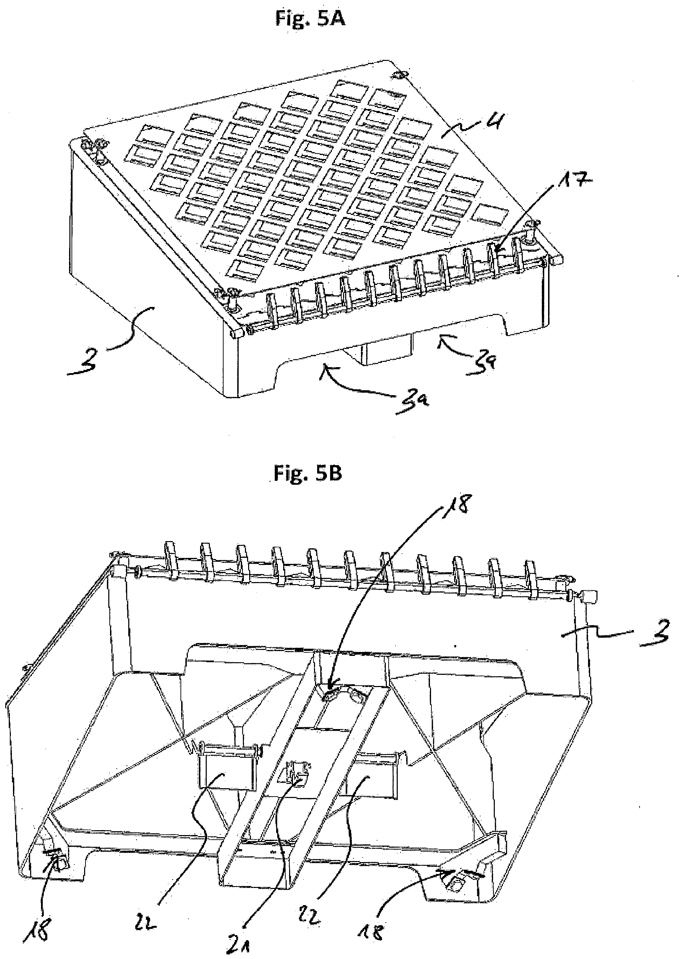

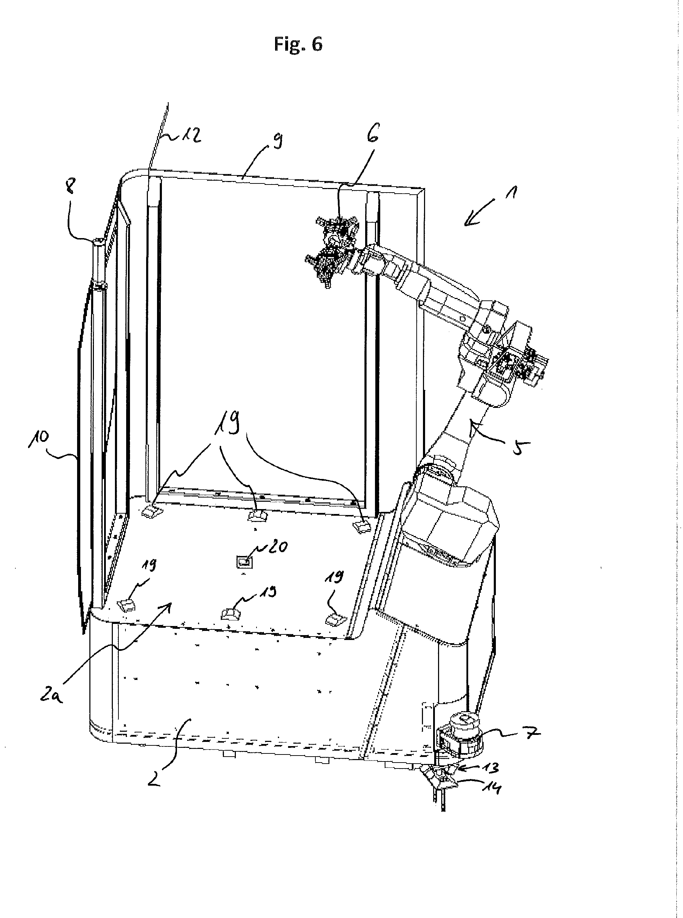

**Figs. 5A und 5B** zeigen jeweils beispielhaft Ansichten des Speicherkörpers 3 der Handhabungsvorrichtung gemäß Fig. 1. Wie bereits beschrieben, trägt der Speicherkörper 3 beispielhaft eine Halterplatte 4 mit einer Mehrzahl von Aufnahmen bzw. Öffnungen zur Aufnahme bzw. Lagerung von Werkzeugen bzw. Werkstücken. **Fig. 6** zeigt eine beispielhafte Perspektivdarstellung der Handhabungsvorrichtung gemäß Fig. 1 mit abgenommenem Speicherkörper.

Vorteilhaft ist der Speicherkörper 3 auf der Oberseite 2a der Handhabungsvorrichtung 1 aufstellbar und kann mit einem Gabelstapler einfach aufgenommen und angehoben werden. Hierzu weist der Speicherkörper 3 beispielhaft zwei Aufnahmeabschnitte 3a für Gabelzinken eines Gabelstaplers auf. Dies ermöglicht es auf einfache und effiziente vorteilhafte Weise, Speicherkörper 3 auf der Handhabungsvorrichtung 1 auszuwechseln bzw. zu entnehmen bzw. aufzusetzen, ohne die gesamte Handhabungsvorrichtung 1 zu bewegen. Die manuelle Bestückung der Halterplatte kann vorteilhaft abseits der Handhabungsvorrichtung 1 durchgeführt werden, ohne den Betrieb der Handhabungsvorrichtung 1 aufzuhalten (d.h. hauptzeitparalleles Rüsten wird einfach und effizient ermöglicht).

Die Aufnahmeabschnitte 3a weisen beispielhaft zudem Klappenabschnitte 22 an der Unterseite 22 des Speicherkörpers 3 auf, derart, dass die Klappenabschnitte 22 bei Einfahren von Gabelzinken eines Gabelstaplers bewegt werden und ein mit den Klappenabschnitten 22 gekoppeltes Verriegelungselement 21 aus einem verriegelnden Zustand mit einem auf der Oberseite 2a des Grundkörpers 2 angeordneten Verriegelungselement 20 zu entriegeln bzw. bei Ausfahren der Gabelzinken aus den Aufnahmeabschnitten 3a wieder zu verriegeln.

Um eine genaue und einfache Positionierung zu gewährleisten und zu vermeiden, dass bei Auswechseln eines Speicherkörpers 3 die Referenzpositionierung bzw. Kalibrierung der Handhabungsvorrichtung 1 erneut durchgeführt werden muss, weist auch die Unterseite des Speicherkörpers 3 Aufstellelemente 18 auf, die paarweise (analog zu den Aufstell- und Zentrierelementpaaren 13 und 14) mit entsprechenden auf der Oberseite 2a des Grundkörpers 2 angeordneten Zentrierelementen 19 zusammenwirken.

Hierzu umfasst die Handhabungsvorrichtung 1 jeweils Paare von auf der Oberseite 2a des Grundkörpers 2 angeordneten Zentrierelementen 19 und an der Unterseite des Speicherkörpers 3 angeordneten Aufstellelementen 18. In diesem Ausführungsbeispiel ist der selbstzentrierenden Positionierungsmechanismus mit genau drei entsprechenden Aufstellelementen 18 ausgebildet. Dies hat den Vorteil, dass eine genaue und stets eine Ebene bildende Dreipunktaufstellung bereitgestellt werden kann. In weiteren Ausführungsbeispielen ist es jedoch möglich, auch mehr oder weniger als drei Aufstellelemente 18 bereitzustellen, wobei insbesondere bei weniger als drei Aufstellelementen 18 ggf. ein oder mehr zusätzliche Fußelemente vorgesehen werden können.

Beispielhaft sind auf der Oberseite 2a des Grundkörpers 2 der Handhabungsvorrichtung 1 sechs Zentrierelemente 19 angeordnet, so dass der Speicherkörper 3 in zwei Positionierungen auf dem Grundkörper 2 aufgesetzt werden kann (einmal auf einer ersten Gruppe von drei der sechs Zentrierelemente 19 und einmal auf den anderen drei Zentrierelementen 19).

Im Grundprinzip weist entweder das Aufstellelement 18 oder das Zentrierelement 19 einen Zentrierabschnitt auf, der sich zu dem anderen Element weisend verjüngt, wobei das jeweilige andere Element eines Paares von Aufstell- und Zentrierelement dann einen Aufnahmeabschnitt aufweist zur selbstzentrierenden Aufnahme des Zentrierabschnitts, wenn das Aufstellelement 18 auf das entsprechende Zentrierelement 19 aufgesetzt wird.

Selbstzentrierend meint hierbei, dass bei einem auf einem Zentrierelement 19 aufgesetzten Aufstellelement 18 eine Positionierung des Aufstellelements 18 in zumindest einer Richtung oder in mehreren Richtungen formschlüssig festgelegt ist, derart, dass bei einem Zustand, in dem alle oder mehrere Aufstellelemente 18 auf den jeweiligen entsprechenden Zentrierelementen 19 aufgesetzt sind, die Positionierung des Speicherkörper 3 relativ zu dem Grundkörper 2 in einer horizontalen Ebene und vertikal nach unten formschlüssig festgelegt ist.

Durch die jeweils paarweise bereitgestellten Aufstellelemente 18 und Zentrierelemente 19 ist es einfach möglich, den Speicherkörper 3 der Handhabungsvorrichtung 1 einfach aufzusetzen, indem die Aufstellelemente 18 über den jeweiligen entsprechenden Zentrierelementen 19 positioniert werden und dann auf diesen aufgesetzt werden, z.B. wenn der Speicherkörper 3 mittels eines Gabelstaplers zu der Handhabungsvorrichtung 1 verfahren wird und dann über den auf der Oberseite 2a des Grundkörpers 2 angeordneten Zentrierelementen 19 aufgesetzt wird.

Beispielhaft weist der Speicherkörper 3 zudem für jede Reihe von Aufnahmen der Halteplatte 4 ein jeweiliges klappbares Stiftelement 17 auf, dass heruntergeklappt werden kann, um zu signalisieren, dass alle in dieser Reihe von Aufnahmen aufgenommenen Werkstücke bereits bearbeitet sind. Dies ermöglicht es, dass ein Bediener von weitem sehen kann, wie viele Werkstücke bereits bearbeitet sind bzw. wann der Speicherkörper 3 neu bestückt werden muss.

**Fig. 7** zeigt eine beispielhafte Draufsicht der Handhabungsvorrichtung 1 gemäß Fig. 1 an einer Werkzeugmaschine 100. Die Handhabungsvorrichtung 1 ist vor der Werkzeugmaschine 100 positioniert. In dieser Fig. 7 ist gezeigt, dass die Sensoreinrichtung 7 vor der Werkzeugmaschine 100 und neben der Handhabungsvorrichtung 1 zwei Zonen überwacht, nämlich eine innere Zone A1 (erster Bereich) und eine äußere Zone A2 (zweiter Bereich).

Wenn die Sensoreinrichtung 7 detektiert, dass eine Person (z.B. ein Bediener) die äußere Zone A2 betritt oder ein Gegenstand in diese Zone A2 einfährt oder hineinbewegt wird, wird der Betrieb der Handhabungsvorrichtung 1 aus Sicherheitsgründen verlangsamt, und wenn die Sensoreinrichtung 7 detektiert, dass eine Person die innere Zone A1 betritt oder ein Gegenstand in diese Zone A1 einfährt oder hineinbewegt wird, wird der Betrieb der Handhabungsvorrichtung 1 aus Sicherheitsgründen gestoppt bzw. der Roboter 5 angehalten.

Die innere Zone A1 umfasst beispielhaft auch den Bereich, in dem das Bedienpult 110 der Werkzeugmaschine angeordnet ist.

In besonders zweckmäßigen Ausführungsbeispielen umfasst die Handhabungsvorrichtung 1 keine eigene Bedien- bzw. Steuervorrichtung sondern kann über die Steuerung der Werkzeugmaschine mittels des Bedienpults 110 der Werkzeugmaschine 100 gesteuert und eingerichtet werden. So kann die Handhabungsvorrichtung 1 vorteilhaft dazu eingerichtet sein, dass ein Einricht- bzw. Kalibrierungsvorgang der Handhabungsvorrichtung 1 über das Bedienpult 110 der Werkzeugmaschine 100 gesteuert wird.

Auch die Programmierung der Handhabungsvorgänge bzw. Einrichtung des Betriebs kann bevorzugt über das Bedienpult 110 der Werkzeugmaschine 100 gesteuert werden. Hierzu kann der Bediener an der Steuerungseinrichtung am Bedienpult 110 der Werkzeugmaschine 100 erforderliche Informationen eingeben, wie z.B. Bezeichnungen der an der Handhabungsvorrichtung 1 gelagerten Werkstücke bzw. Werkzeuge, die Maße der Werkstücke (z.B. vor Bearbeitung durch Eingabe der Rohteilmaße und/oder nach Bearbeitung durch Eingabe der Fertigteilmaße, d.h. z.B. Rohteildaten und/oder Fertigteildaten, ggf. mit Werkstücklängen und Werkstückdurchmessern) bzw. Werkzeuge, Angabe der verwendeten oder zu verwendeten Ablagen bzw. Aufnahmen auf der Halterplatte 4, Angabe der Bemaßung von Spannfuttern bzw. Übergabepositionen, Angabe von auszuführenden Funktionen, und/oder Angabe der Bemaßung der Greifer der Greifereinrichtung 6, etc.

Hierzu kann die Bedienoberfläche des Bedienpults 110 der der Werkzeugmaschine ein Computer-Programm z.B. mit einer entsprechenden graphischen Benutzeroberfläche umfassen (z.B. in Form einer APP der Benutzeroberfläche der Steuerungssoftware der Werkzeugmaschine), die die Schritte der Einrichtung der Handhabungsvorrichtung 1 und insbesondere die Eingabe vorstehend genannter Informationen an dem Bedienpult 110 der Werkzeugmaschine ermöglicht.

In den vorhergehend beschriebenen Ausführungsbeispielen kann die Handhabungsvorrichtung 1 über das Bedienpult bzw. die Steuerung der Werkzeugmaschine mitgesteuert bzw. eingerichtet werden, wenn die Handhabungsvorrichtung 1 mit der Werkzeugmaschine über eine Kommunikationsverbindung verbunden ist. Hierbei kann bevorzugt zumindest ein Not-AusSchalter zum Anhalten des Betriebs der Handhabungsvorrichtung 1 an der Handhabungsvorrichtung 1 (z.B. an dem Grundkörper 2) vorgesehen sein. In weiteren Ausführungsbeispielen ist es auch möglich, eine eigene bzw. separate Steuer- bzw. Bedienvorrichtung an der Handhabungsvorrichtung 1 zum Bedienen, Steuern und/oder Einrichten der Handhabungsvorrichtung 1 vorzusehen.

Vorstehend wurden Beispiele bzw. Ausführungsbeispiele der vorliegenden Erfindung sowie deren Vorteile detailliert unter Bezugnahme auf die beigefügten Figuren beschrieben. Es sei erneut hervorgehoben, dass die vorliegende Erfindung jedoch in keinster Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges des unabhängigen Anspruchs umfasst sind.

Zusammenfassend kann eine Handhabungsvorrichtung zum Einsatz an einer Werkzeugmaschine bereitgestellt werden, die universell und effizient bei geringem Platzbedarf und bevorzugt mobil an mehreren Werkzeugmaschinen, je nach Bedarf, einsetzbar ist und einfach eingerichtet werden kann.

## Patentansprüche

1. Handhabungsvorrichtung zum Einsatz an einer Werkzeugmaschine, umfassend:
- einen auf einer Bodenfläche aufstellbaren Grundkörper (2),
- einen auf der Oberseite des Grundkörpers (2) aufstellbaren Speicherkörper (3) zur Lagerung einer Mehrzahl von Werkstücken oder Werkzeugen, und
- einen an dem Grundkörper (2) angeordneten Handhabungsroboter (5) mit einer Greifereinrichtung (6) zur Aufnahme eines Werkstücks bzw. Werkzeugs von dem Speicherkörper (3) und zum Einsetzen des mit der Greifereinrichtung (6) von dem Speicherkörper (3) aufgenommenen Werkstücks bzw. Werkzeugs an einer entsprechenden Werkstück- bzw. Werkzeugaufnahme der Werkzeugmaschine (100),
**dadurch gekennzeichnet, dass**
eine Mehrzahl von ersten Aufstellelementen (18) auf der Unterseite des Speicherkörpers (3) angeordnet sind und eine Mehrzahl von ersten Zentrierelementen (19) auf der Oberseite (2a) des Grundkörpers (2) angeordnet sind,
wobei die ersten Aufstellelemente (18) bei auf der Oberseite (2a) des Grundkörpers (2) aufgestelltem Speicherkörper (3) jeweils paarweise mit den ersten Zentrierelementen (19) selbstzentrierend zusammenwirken, derart, dass der Speicherkörper (3) relativ zu dem Grundkörper (2) eine vorbestimmte Referenzpositionierung einnimmt, wobei
eine Mehrzahl von zweiten Aufstellelementen (13) auf der Unterseite des Grundkörpers (2) angeordnet sind, die dazu eingerichtet sind, bei auf der Bodenfläche aufgestelltem Grundkörper (2), wenn eine Mehrzahl von zweiten Zentrierelementen (14) auf der Bodenfläche angeordnet sind, jeweils paarweise mit den zweiten Zentrierelementen (14) selbstzentrierend zusammenzuwirken, derart, dass der Grundkörper (2) relativ zu der Bodenfläche bzw. relativ zu der auf der Bodenfläche stehenden Werkzeugmaschine (100) eine vorbestimmte Referenzpositionierung einnimmt,
wobei die Handhabungsvorrichtung über eine kabellose Verbindung oder Kabelsteckverbindung mit der Werkzeugmaschine (100) bzw. einer Steuerungseinrichtung der Werkzeugmaschine verbindbar bzw. koppelbar ist, und dazu eingerichtet ist, über die Kommunikationsverbindung die verbundene Werkzeugmaschine aus einer Gruppe von Werkzeugmaschinen zu identifizieren und in Abhängigkeit der identifizierten Werkzeugmaschine eine vorgespeicherte Referenzpositionierung zu bestimmen.

2. Handhabungsvorrichtung gemäß Anspruch 1, **dadurch gekennzeichnet, dass**
drei erste Aufstellelemente (18) auf der Unterseite des Speicherkörpers (3) angeordnet sind zur Bereitstellung einer Drei-Punkt-Aufstellung.

3. Handhabungsvorrichtung gemäß Anspruch 2, **dadurch gekennzeichnet, dass**
drei erste Zentrierelemente (19) auf der Oberseite des Grundkörpers (2) angeordnet sind zur Bereitstellung einer Drei-Punkt-Aufstellung des Speicherkörpers (3).

4. Handhabungsvorrichtung gemäß Anspruch 3, **dadurch gekennzeichnet, dass**
die drei ersten Zentrierelemente (19) auf der Oberseite des Grundkörpers (2) zur Bereitstellung einer Drei-Punkt-Aufstellung des Speicherkörpers (3) in einer ersten Stellung angeordnet sind, wobei drei weitere erste Zentrierelemente (19) auf der Oberseite des Grundkörpers (2) angeordnet sind zur Bereitstellung einer Drei-Punkt-Aufstellung des Speicherkörpers (3) in einer zweiten Stellung.

5. Handhabungsvorrichtung gemäß einem der vorstehenden Ansprüche, **dadurch gekennzeichnet, dass**
der Speicherkörper (3) zwei Aufnahmeabschnitte (3a) für Gabelzinken eines Gabelstaplers aufweist, zum Aufnehmen und Abheben des Speicherkörpers (3) von dem Grundkörper (2) mittels eines Gabelstaplers.

6. Handhabungsvorrichtung gemäß Anspruch 5, **dadurch gekennzeichnet, dass**
der Speicherkörper (3) einen Verriegelungsmechanismus umfasst, mit einem Verriegelungselement (21), das mit einem auf der Oberseite (2a) des Grundkörpers (2) angeordneten Verriegelungselement (20) in einen verriegelten Zustand bringbar ist.

7. Handhabungsvorrichtung gemäß Anspruch 6, **dadurch gekennzeichnet, dass**
der Verriegelungsmechanismus dazu eingerichtet ist, das Verriegelungselement (21) des Verriegelungsmechanismus zu entriegeln, wenn Gabelzinken eines Gabelstaplers in die Aufnahmeabschnitte (3a) des Speicherkörpers (3a) für Gabelzinken eindringen.

8. Handhabungsvorrichtung gemäß einem der vorstehenden Ansprüche, **dadurch**
**gekennzeichnet, dass**
der Speicherkörper (3) eine Halteplatte (4) trägt, die eine Mehrzahl von Aufnahmeöffnungen für Werkzeuge bzw. Werkstücke aufweist.

9. Handhabungsvorrichtung gemäß einem der vorstehenden Ansprüche,
**dadurch gekennzeichnet, dass**
drei zweite Aufstellelemente (13) zur Bereitstellung einer Drei-Punkt-Aufstellung auf der Unterseite des Grundkörpers (2) angeordnet sind.

10. Handhabungsvorrichtung gemäß einem der vorstehenden Ansprüche,
**gekennzeichnet durch**
eine Sensoreinrichtung (7) zum Detektieren einer Person oder eines Gegenstands in einem Bereich benachbart zu der Handhabungsvorrichtung (1).

11. Handhabungsvorrichtung gemäß Anspruch 10, **dadurch gekennzeichnet, dass**
die Handhabungsvorrichtung (1) dazu eingerichtet ist, den Betrieb zu stoppen, wenn die Sensoreinrichtung (7) eine Person oder einen Gegenstand in einem ersten Bereich (A1) detektiert, und/oder
die Handhabungsvorrichtung (1) dazu eingerichtet ist, in einen verlangsamten Betrieb zu wechseln, wenn die Sensoreinrichtung (7) eine Person oder einen Gegenstand in einem zweiten Bereich (A2) detektiert.

12. Handhabungsvorrichtung gemäß einem der vorstehenden Ansprüche,
**dadurch gekennzeichnet, dass**
die Handhabungsvorrichtung (1) dazu eingerichtet ist, über ein Bedienpult (110) der verbundenen Werkzeugmaschine gesteuert und/oder eingerichtet zu werden.

## Claims

1. A handling apparatus for use on a machine tool, comprising:
- a base body (2) which can be set up on a floor space,
- a storage body (3) which can be set up on the top side of said base body (2) and is configured to store a plurality of workpieces or tools, and
- a handling robot (5) which is arranged on said base body (2) and includes a gripper device (6) for receiving a workpiece and/or tool from said storage body (3) and for inserting the workpiece and/or tool received from said storage body (3) by said gripper device (6) into a corresponding workpiece and/or tool receptacle of said machine tool (100),
**characterized in that**
a plurality of first set-up elements (18) are arranged on the bottom side of said storage body (3) and a plurality of first centering elements (19) are arranged on the top side (2a) of said base body (2), and
wherein, when said storage body (3) is set up on the top side (2a) of said base body (2), said first set-up elements (18) interact in pairs in each case with said first centering elements (19) in a self-centering manner in such a way that said storage body (3) adopts a predetermined reference position in relation to said base body (2),
wherein a plurality of second set-up elements (13) are arranged on the bottom side of said base body (2) and, when said base body (2) is set up on said floor space and a plurality of second centering elements (14) are arranged on said floor space, are configured to interact in pairs in each case with said second centering elements (14) in a self-centering manner in such a way that said base body (2) adopts a predetermined reference position in relation to the floor space and/or in relation to said machine tool (100) set up on the floor space,
wherein said handling apparatus can be connected and/or coupled to said machine tool (100) or a control device of the machine tool via a wireless connection or cable plug connection and is configured to determine a previously stored reference position depending on the identified machine tool.

2. The handling apparatus according to claim 1, **characterized in that**
three first set-up elements (18) are arranged on the bottom side of said storage body (3) in order to provide a three-point setup.

3. The handling apparatus according to claim 2, **characterized in that**
three first centering elements (19) are arranged on the top side of said base body (2) in order to provide a three-point setup of said storage body (3).

4. The handling apparatus according to claim 3, **characterized in that**
three first centering elements (19) are arranged on the top side of said base body (2) in order to provide a three-point setup of said storage body (3) in a first position, and three further first centering elements (19) are arranged on the top side of said base body (2) in order to provide a three-point setup of said storage body (3) in a second position.

5. The handling apparatus according to one of the preceding claims, **characterized in that**
said storage body (3) has two receiving portions (3 a) for fork arms of a forklift for receiving and lifting said storage body (3) from said base body (2) by means of a forklift.

6. The handling apparatus according to claim 5, **characterized in that**
said storage body (3) comprises a locking mechanism having a locking element (21) which can be interlocked with a locking element (20) arranged on the top side (2a) of said base body (2).

7. The handling apparatus according to claim 6, **characterized in that**
said locking mechanism is configured to unlock said locking element (21) of said locking mechanism when fork arms of a forklift enter into said receiving portions (3a) of said storage body (3) for fork arms.

8. The handling apparatus according to one of the preceding claims, **characterized in that**
said storage body (3) carries a holding plate (4) which has a plurality of receiving openings for tools and/or workpieces.

9. The handling apparatus according to one of the preceding claims, **characterized in that**
three second set-up elements (13) are arranged on the bottom side of said base body (2) in order to provide a three-point setup.

10. The handling apparatus according to one of the preceding claims, **characterized by**
a sensor device (7) for detecting a person or an object in an area adjacent to said handling apparatus (1).

11. The handling apparatus according to claim 10, **characterized in that**
said handling apparatus (1) is configured to stop the operation when said sensor device (7) detects a person or an object in a first area (A1), and/or
said handling apparatus (1) is configured to switch into a decelerated operation when said sensor device (7) detects a person or an object in a second area (A2).

12. The handling apparatus according to one of the preceding claims, **characterized in that**
said handling apparatus (1) is configured to be controlled and/or installed via a control panel (110) of the connected machine tool.

## Revendications

1. Dispositif de manutention destiné à être utilisé sur une machine-outil, comprenant :
- un corps de base (2) qui peut être positionné sur une surface de sol,
- un corps de stockage (3) qui peut être positionné sur la face supérieure du corps de base (2) pour stocker une pluralité de pièces à œuvrer ou d'outils, et
- un robot de manutention (5) disposé sur le corps de base (2) et comprenant un dispositif préhenseur (6) pour recevoir une pièce à œuvrer ou un outil depuis le corps de stockage (3) et pour insérer la pièce à œuvrer ou l'outil, reçu(e) par le dispositif préhenseur (6) depuis le corps de stockage (3), sur un porte-pièce ou porte-outil correspondant de la machine-outil (100),
**caractérisé en ce que**
une pluralité de premiers éléments de positionnement (18) sont disposés sur la face inférieure du corps de stockage (3), et une pluralité de premiers éléments de centrage (19) sont disposés sur la face supérieure (2a) du corps de base (2), et
lorsque le corps de stockage (3) est positionné sur la face supérieure (2a) du corps de base (2), les premiers éléments de positionnement (18) coopèrent chacun par paires avec les premiers éléments de centrage (19) de manière autocentrée, de telle sorte que le corps de stockage (3) prenne une position de référence prédéterminée par rapport au corps de base (2),
une pluralité de seconds éléments de positionnement (13) sont disposés sur la face inférieure du corps de base (2), qui sont conçus pour coopérer chacun par paires avec les seconds éléments de centrage (14) de manière autocentrée, lorsque le corps de base (2) est positionné sur la surface du sol et qu'une pluralité de seconds éléments de centrage (14) sont disposés sur la surface du sol, de telle sorte que le corps de base (2) prenne une position de référence prédéterminée par rapport à la surface du sol ou par rapport à la machine-outil (100) se trouvant sur la surface du sol,
le dispositif de manutention peut être connecté ou couplé à la machine-outil (100) ou à un dispositif de commande de la machine-outil par une connexion sans câble ou par une connexion par câble enfichable, respectivement, et est configuré pour identifier la machine-outil connectée parmi un groupe de machines-outils via la connexion de communication et pour déterminer une position de référence préenregistrée, en fonction de la machine-outil identifiée.

2. Dispositif de manutention selon la revendication 1,
**caractérisé en ce que**
trois premiers éléments de positionnement (18) sont disposés sur la face inférieure du corps de stockage (3) afin d'assurer un positionnement en trois points.

3. Dispositif de manutention selon la revendication 2,
**caractérisé en ce que**
trois premiers éléments de centrage (19) sont disposés sur la face supérieure du corps de base (2) afin d'assurer un positionnement en trois points du corps de stockage (3).

4. Dispositif de manutention selon la revendication 3,
**caractérisé en ce que**
les trois premiers éléments de centrage (19) sont disposés sur la face supérieure du corps de base (2) afin d'assurer un positionnement en trois points du corps de stockage (3) dans une première position, tandis que trois autres premiers éléments de centrage (19) sont disposés sur la face supérieure du corps de base (2) afin d'assurer un positionnement en trois points du corps de stockage (3) dans une deuxième position.

5. Dispositif de manutention selon l'une des revendications précédentes,
**caractérisé en ce que**
le corps de stockage (3) comporte deux portions de réception (3a) pour les bras de fourche d'un chariot élévateur à fourche, afin de recevoir et de soulever le corps de stockage (3) depuis le corps de base (2) au moyen d'un chariot élévateur à fourche.

6. Dispositif de manutention selon la revendication 5,
**caractérisé en ce que**
le corps de stockage (3) comprend un mécanisme de verrouillage pourvu d'un élément de verrouillage (21) qui peut être amené à l'état verrouillé avec un élément de verrouillage (20) disposé sur la face supérieure (2a) du corps de base (2).

7. Dispositif de manutention selon la revendication 6,
**caractérisé en ce que**
le mécanisme de verrouillage est conçu pour déverrouiller l'élément de verrouillage (21) du mécanisme de verrouillage lorsque les bras de fourche d'un chariot élévateur à fourche pénètrent dans les portions de réception (3a) du corps de stockage (3a) destinées aux bras de fourche.

8. Dispositif de manutention selon l'une des revendications précédentes,
**caractérisé en ce que**
le corps de stockage (3) porte un plateau de retenue (4) qui comprend une pluralité d'ouvertures de réception d'outils ou de pièces à œuvrer.

9. Dispositif de manutention selon l'une des revendications précédentes,
**caractérisé en ce que**
trois seconds éléments de positionnement (13) sont disposés sur la face inférieure du corps de base (2) afin d'assurer un positionnement en trois points.

10. Dispositif de manutention selon l'une des revendications précédentes,
**caractérisé par**
un dispositif capteur (7) pour détecter une personne ou un objet dans une zone voisine du dispositif de manutention (1).

11. Dispositif de manutention selon la revendication 10,
**caractérisé en ce que**
le dispositif de manutention (1) est conçu pour stopper le fonctionnement lorsque le dispositif capteur (7) détecte une personne ou un objet dans une première zone (A1) et/ou
le dispositif de manutention (1) est conçu pour passer vers un fonctionnement ralenti lorsque le dispositif capteur (7) détecte une personne ou un objet dans une seconde zone (A2).

12. Dispositif de manutention selon l'une des revendications précédentes,
**caractérisé en ce que**
le dispositif de manutention (1) est conçu pour être commandé et/ou réglé à partir d'un panneau de commande (110) de la machine-outil connectée.
